Europäisches Patentamt

European Patent Office

Office européen des brevets

(19)

(11)  **EP 1 307 054 A2**

(12)     **EUROPEAN PATENT APPLICATION**

(43) Date of publication:
     **02.05.2003   Bulletin 2003/18**

(51) Int Cl.[7]: **H04N 7/26**, H04N 7/50

(21) Application number: **02023727.7**

(22) Date of filing: **23.10.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventor: **Lee, Seung-Cheol**<br>**Sueon-city, Kyungki-do (KR)** |
| (30) Priority:  **23.10.2001   KR 2001065476** | (74) Representative: **Grünecker, Kinkeldey,**<br>**Stockmair & Schwanhäusser Anwaltssozietät**<br>**Maximilianstrasse 58**<br>**80538 München (DE)** |
| (71) Applicant: **SAMSUNG ELECTRONICS CO., LTD.**<br>**Suwon-City, Kyungki-do (KR)** | |

(54)    **Video decoder including a scale-down function for scaling down an image and method thereof**

(57)     A compression video decoder and a method thereof, which decodes a standard compressed and encoded video stream, directly outputs the decoded image according to a screen size of a display device without using a special scale-down block for scaling down the image, increases a speed by reducing computational complexity for scaling down the image, maintains quality of the original image, and minimizes distortion. The compression video decoder for decoding the compressed and encoded video stream according to a video compression method using discrete cosine transform (DCT) and motion compensation (MC), includes an inverse discrete cosine transform (IDCT) block for extracting an N×N block DCT image in an image scale-down ratio according to DC coefficients from an 8×8 block DCT image which has been obtained from the compressed and encoded video stream and will be IDCT-processed, multiplying the respective coefficients by N/8, and performing the IDCT thereon, and an MC block for performing the MC by using the IDCT-processed reference image and the current image, and reducing a magnitude of a motion vector and a range of the MC at a ratio of N:8.

FIG.1
(PRIOR ART)

EP 1 307 054 A2

**Description**

**BACKGROUND OF THE INVENTION**

**1. Field of the Invention**

The present invention relates generally to a video compression encoding system, and in particular to a method for decoding a compressed and encoded video stream, and scaling the video stream down to reduce an image.

2. Description of the Related Art

Recently, an international mobile telecommunications-2000 (IMT-2000) technology has been actively progressing, and a mobile communication terminal including a multimedia function for displaying motion pictures has been developed. The mobile communication terminal including the motion picture function (abbreviated as 'motion picture terminal') provides a video on demand (VOD) by using a large multi-color liquid crystal display (LCD), and also enables users to perform image communication using a camera. A standard coder/decoder (CODEC) is used to display the motion pictures on any kinds of motion picture terminals. Exemplary CODECS include a low bit rate compression video CODEC such as a moving picture expert group-4 (MPEG-4), H.263 and H.26L.

On the other hand, video compression encoding such as MPEG-1, MPEG-2, MPEG-4, H.261, H.263, and H. 26L removes temporal redundancy as well as spatial redundancy to compress an image. First, removal of the spatial redundancy will now be explained. A spatial domain and a frequency domain have an orthogonal property, and thus perform invertible transformation. Spatial domain and frequency domain can be transformed accordingly, depending upon the intended use. As compared with other frequency transformations, a discrete cosine transform (DCT) shows a high energy compaction property, easily achieves optimization, and has a lot of fast algorithms. When the DCT is finished, spatial redundancy is removed by using a property that two-dimensional image energy is concentrated on DC(Direct Current) coefficient and its adjacent DCT coefficients of low frequency terms, that is large values are concentrated on the top left end and small values are concentrated on the bottom right end. The large values are decreased according to the quantization after the DCT, and the small values are converged into '0' and expected to be compressed by variable length coding (VLC).

In addition, motion compensation (MC) is used to remove the temporal redundancy. For example, the MPEG-4 simple profile employs an intra-video object plane (I-VOP) and a predictive-video object plane (P-VOP). The I-VOP is an image obtained by encoding an entire screen, and the P-VOP image is a difference image obtained by removing the temporal redundancy, which only shows a difference from the previous screen. An MC block of a compression video decoder decodes the P-VOP, and adds the decoded image to a reference image to reproduce the screen. Here, the MC block moves from the previous screen by a motion vector, reads a reference block, and reconstitutes an image. The MC is performed by moving in 16×16 macro block units as long as a vector magnitude of 0.5 pixel units. Here, '16×16' represents horizontal x vertical pixel numbers as in the explanations below.

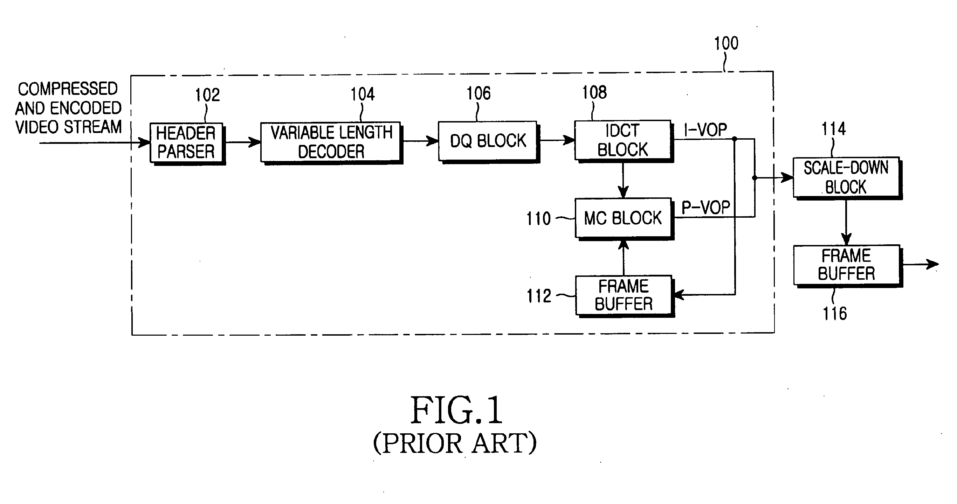

FIG. 1 is a block diagram illustrating a general motion picture terminal including a compression video decoder 100 under a video compression method using the DCT and MC, a scale-down block 114 connected to the output terminal of the compression video decoder 100 for scale-down, and a frame buffer 116. A compressed and encoded video stream inputted to the compression video decoder 100 is a video stream compressed and encoded by the MPEG-4 simple profile among the video compression methods using the DCT and MC.

The compression video decoder 100 includes a header parser 102, a variable length decoder 104, a dequantization (DQ) block 106, an inverse discrete cosine transform (IDCT) block 108, an MC block 110, and a frame buffer 112. The compression video decoder 100 decodes the compressed and encoded video stream to obtain the original image. Due to the compression encoding, a variety of information of the compressed and encoded video stream is analyzed by the head parser 102, variable length decoded by the variable length decoder 104, dequantized by the DQ block 106, and transmitted to the IDCT block 108. The IDCT block 108 performs the IDCT on the dequantized image, namely 8x8 block DCT image. Here, the IDCT block 108 outputs an image obtained by decoding the I-VOP as an output image, stores it in the frame buffer 112, and transmits the P-VOP to the MC block 110. Then, the MC block 110 performs the MC by using the I-VOP and the P-VOP, decodes the image of the P-VOP, and outputs the decoded image as an output image. In order to scale down the decoded image according to a size of a screen of a display device, the scale-down block 114 scales down the image at a previously-set ratio. The frame buffer 116 stores the image so that the scale-down block 114 can scale down the image. The scaled-down image is transmitted to the display device, and then displayed on the screen.

In addition to a chip being used as a main control unit such as a mobile system modem (MSM) of QUALCOMM, the motion picture terminal requires an additional chip and a large capacity random access memory (RAM) due to a low processing performance of a central processing unit (CPU). An optimized code that remarkably reduces computational complexity differently than a general cable environment computer is necessary to embody a multimedia technology using a high processing performance and large storage space on a limited platform.

In addition, motion picture terminal manufacturers gradually increase LCD sizes to embody better user interfaces. As such, LCDs vary in size. Conversely, the standard CODEC only supports a general size, such as a quarter common interchange format (QCIF) and a common interchange format (CIF). Accordingly, a module for scaling up/down an image must be designed as an application specific integrated circuit (ASIC) for a variety of motion picture terminals.

As motion picture terminals miniaturize, the size of an LCD also decreases. As a result, an output image decoded by a standard CODEC must be scaled down to be displayed on the small-sized LCD. That is, the scale-down block 114 of FIG. 1 is used to scale down the image, and thus a frame buffer 116 is also required.

Moreover, exemplary methods for scaling down an image include a method for processing an image in a spatial domain, and a method for processing an image in a frequency domain. The spatial method achieves a high speed result due to low computational complexity, but distorts the image. The frequency method obtains a clearer image than the spatial method, but is slower in speed due to high computational complexity. In addition, the frequency method may deteriorate quality of image because of accumulated calculation errors. In order to improve the low speed due to high computational complexity, a high performance CPU must be included and a capacity of the RAM must be increased.

## SUMMARY OF THE INVENTION

It is, therefore, an object of the present invention to provide a compression video decoder which decodes a standard compressed and encoded video stream, and directly outputs the decoded image according to a screen size of a display device, without using a special scale-down block for scaling down the image, and a method thereof.

It is another object of the present invention to provide a compression video decoder which increases a decoding speed by reducing computational complexity for scaling down an image, maintain quality of the original image and minimize distortion, and a method thereof.

To achieve the above objects, there is provided a compression video decoder for decoding a compressed and encoded video stream according to a video compression method using discrete cosine transform (DCT) and motion compensation (MC), including an inverse discrete cosine transform (IDCT) block for extracting an NxN block DCT image in an image scale-down ratio according to DC coefficients from an 8x8 block DCT image, which has been obtained from the compressed and encoded video stream and will be IDCT-processed, multiplying the respective coefficients by N/8, and performing the IDCT thereon, and an MC block for performing the MC by using the IDCT-processed reference image and the current image, and reducing a magnitude of a motion vector and a range of the MC at a ratio of N:8.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram illustrating a compression video decoder and a scale-down block for a general motion picture mobile communication terminal;
FIG. 2 is a block diagram illustrating a compression video decoder in accordance with a preferred embodiment of the present invention;
FIG. 3 is a flowchart illustrating a process of an IDCT block in accordance with the preferred embodiment of the present invention;
FIG. 4 is an exemplary diagram illustrating an image scale-down process of the IDCT block in accordance with the preferred embodiment of the present invention;
FIG. 5 is a flowchart illustrating a process of an MC block in accordance with the preferred embodiment of the present invention;
FIG. 6 is an exemplary diagram illustrating an image scale-down process of the MC block in accordance with the preferred embodiment of the present invention; and
FIGS. 7 and 8 are diagrams illustrating a simulation result for comparing quality of scaled-down images in the present invention and the conventional art.

## DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

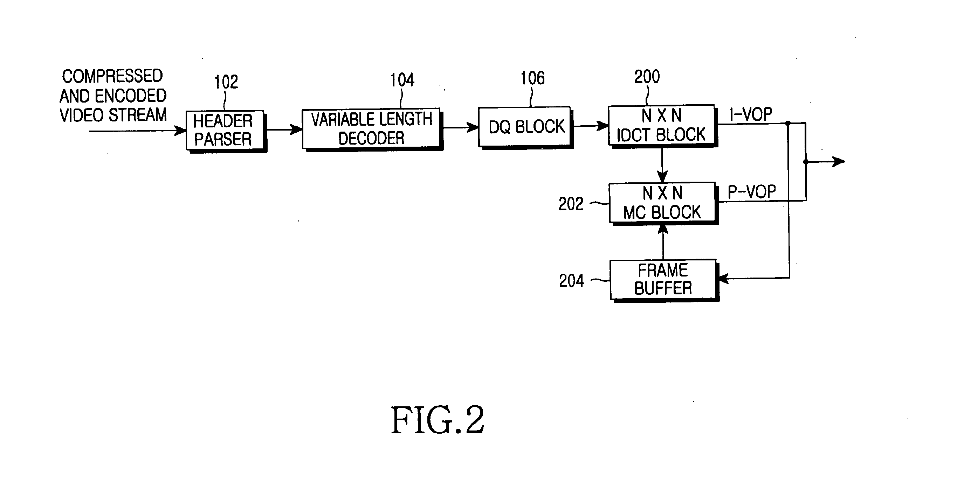

FIG. 2 is a block diagram illustrating a compression video decoder in accordance with a preferred embodiment of the present invention. Similarly to FIG. 1, decoding a compressed and encoded video stream of an MPEG-4 simple profile is exemplified. Here, a header parser 102, a variable length decoder 104 and a DQ block 106 are operated in the same manner as in the compression video decoder 100 of FIG. 1, and thus provided with same reference numerals. On the other hand, the compression video decoder of the invention uses an N×N IDCT block 200 instead of the IDCT block 108 for the compression video decoder 100 of FIG. 1, and also uses an NxN MC block 202 instead of the MC block 110. In addition, a frame buffer 204 has a size of N/8, which is different from the frame buffer 112 of FIG. 1. Here, 'N' is equal to or less than 7 to scale down the 8x8 block DCT image, and 'N×N' is determined according to the image scale-down ratio for the 8x8 block DCT image. For example, when the reduced size of the screen is supposed to be '132×108', 'N×N' is determined as '6×6".

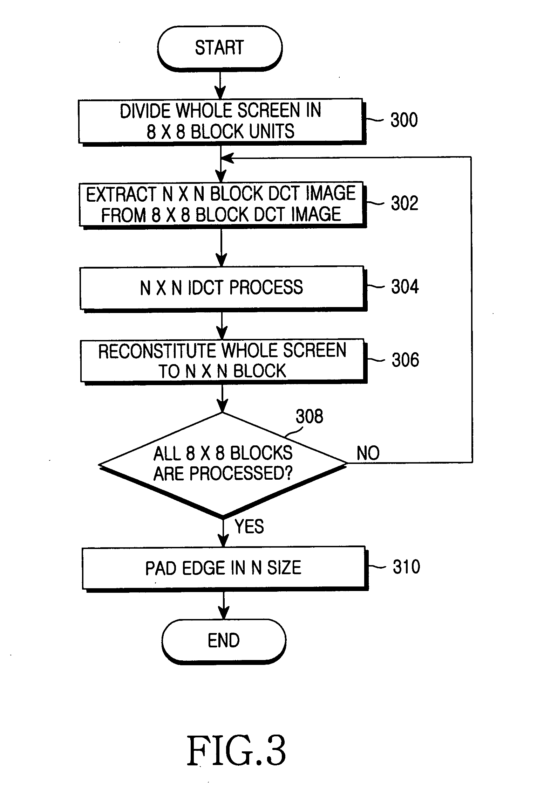

Referring to FIG. 3, a flowchart illustrating a process (300-310) of the NxN IDCT block 200, the NxN IDCT block 200 divides the DCT image which has been obtained from the compressed and encoded video stream and will be IDCT-processed, namely one whole screen dequantized by the DQ block 106 in 8x8 block units in step 300. Thereafter, the NxN IDCT block 200 extracts the NxN block DCT image in an image scale-down ratio according to DC coefficients from the 8x8 block DCT image, and multiples the respective coefficients by N/8 in step 302. The NxN IDCT block 200 performs the NxN IDCT in step 304. The NxN block DCT image is extracted from the 8x8 block DCT image, and thus resolution is reduced by a ratio of N/8. However, the reconstituted image is also scaled down by NxN, to maintain image quality. Since the remaining portion of the 8x8 block DCT image except for the NxN block DCT image is removed, the respective coefficients of the NxN block DCT image are multiplied by N/8 so that the whole DCT coefficient values can be reduced at a ratio of N/8.

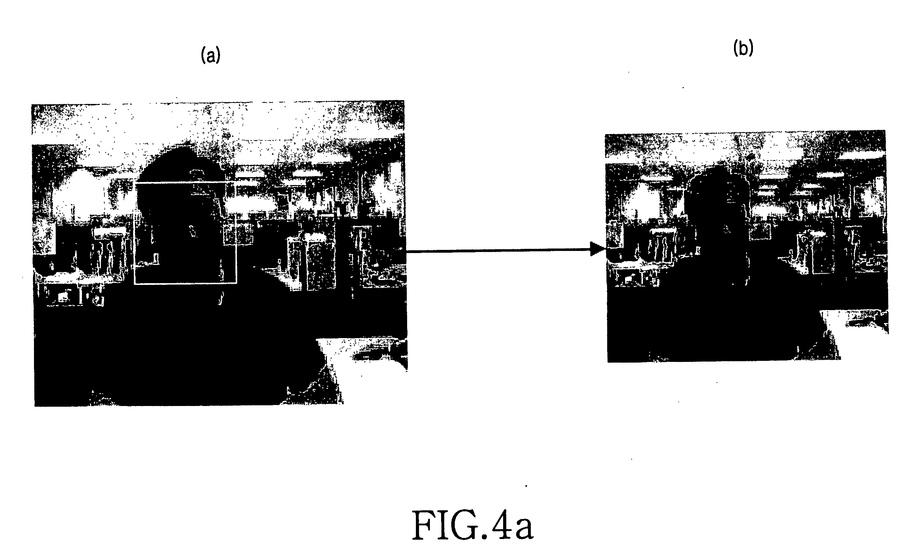

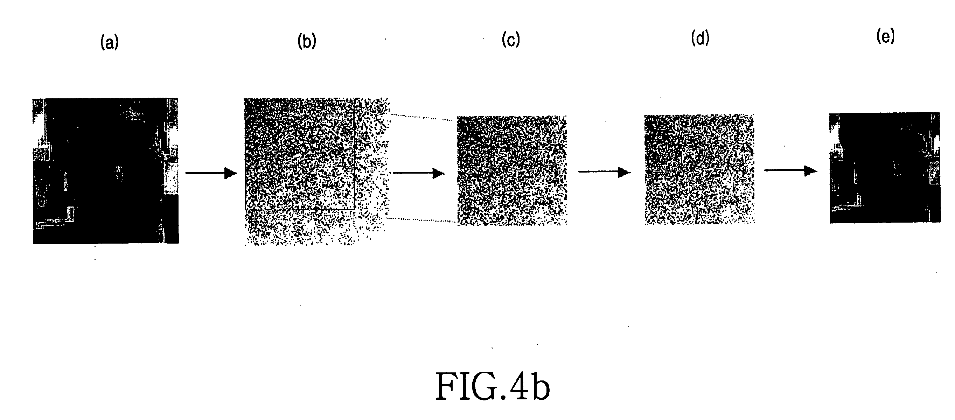

For example, when the original screen of FIG.4a(a) is scaled down to the screen of FIG. 4a(b), if the scale-down ratio is 75%, NxN becomes 6x6. In addition, when it is presumed that the rectangular portion of the screen of FIG. 4a(a), namely the image of FIG. 4b(a) is one 8x8 block DCT image as illustrated in FIG. 4b(b), the rectangular portion of FIG. 4b(b), namely the 6x6 block DCT image as illustrated in FIG. 4b(c) is only extracted in step 302. When the respective coefficients are multiplied by N/8 to reduce the whole coefficient values of the 6x6 block DCT image of FIG. 4b(c) at a ratio of N:8, FIG. 4b(d) shows the resultant image. The 6x6 block DCT image of FIG. 4b(d) becomes a scaled-down image as illustrated in FIG. 4b(e).

The NxN IDCT-processed block of step 304 is added to reconstitute the whole screen to NxN block in step 306. When the 8x8 block DCT images of one whole screen are all processed in step 308, the routine goes to step 310. When the process of the images is not finished, the routine goes to step 302, and repeatedly performs the NxN IDCT on the succeeding 8x8 block DCT image. Whenever one NxN IDCT is finished as in step 306, the block is added to the whole screen, instead of performing the NxN IDCT on the whole 8x8 blocks and reconstituting the whole screen to NxN block. As a result, it is not necessary to specially store the NxN IDCT-processed blocks or reconstitute the whole screen to NxN block at a time. Although the standard compression encoding suggests to pad the edge at a size of 8, the IDCT-processed images of the whole screen are scaled down to a size of N and then padded. Thus, the IDCT for one screen is finished.

As described above, when the N×N block DCT image is extracted from the 8x8 block DCT image, resolution is reduced at a ratio of N/8. However, the reconstituted image is also scaled down to NxN, thereby maintaining the quality of image. Moreover, the number of the DCT coefficients for the IDCT is decreased in proportion to a square of the scale-down ratio, to remarkably reduce computational complexity. For example, when an 8x8 block image is reconstituted to an 6x6 block image, frequency of the IDCT functions is identical; but the number of the input coefficients is reduced from 64 to 36. In general, the computational complexity of the IDCT is '$O(n^3)$ ', even the computational complexity of an adaptive IDCT using fast algorithm is '$O(n^2)$', and thus the real computational complexity is reduced in proportion to a 5 square or 4 square of the scale-down ratio.

For reference, the NxN IDCT of the invention can be represented by following formula 1:

<Formula 1>

$$f(x,y) = \frac{2}{N} \sum_{u=0}^{N-1} \sum_{v=0}^{N-1} C(u)C(v)F(u,v)\cos\frac{(2x+1)u\pi}{2N}\cos\frac{(2y+1)v\pi}{2N}$$

$$C(u),C(v) = \begin{cases} \dfrac{1}{\sqrt{2}} & for\ u,v = 0 \\ \\ 1 & otherwise \end{cases}$$

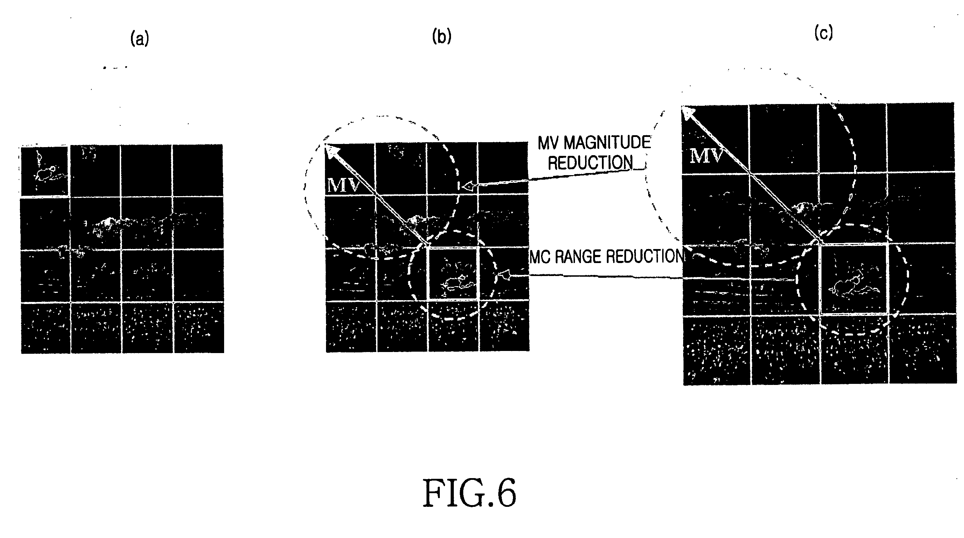

In the case of the IDCT-processed image by the NxN IDCT block 200, an image obtained by decoding the I-VOP is outputted as an output image as in the compression video decoder 100 of FIG. 1, and stored in the frame buffer 204, and the P-VOP is transmitted to the NxN MC block 202. Then, the MC block 202 performs the MC by using the I-VOP and P-VOP, decodes the image of the P-VOP and outputs it as an output image. Here, the MC block 202 reduces a magnitude of a motion vector and a range of the MC at a ratio of N:8. That is, the magnitude of the motion vector must be reduced at the scale-down ratio of the image to indicate an exact position, and the range of the MC must be reduced at the scale-down ratio to compensate only for the effective range. For example, when FIG. 6(c) shows an image obtained by the MC in the 8x8 block IDCT, the I-VOP which is the reference image which will be MC-processed by the NxN MC block 202 and the P-VOP which is the current image must be the scaled-down images as illustrated in FIG. 6(a) and FIG. 6(b).

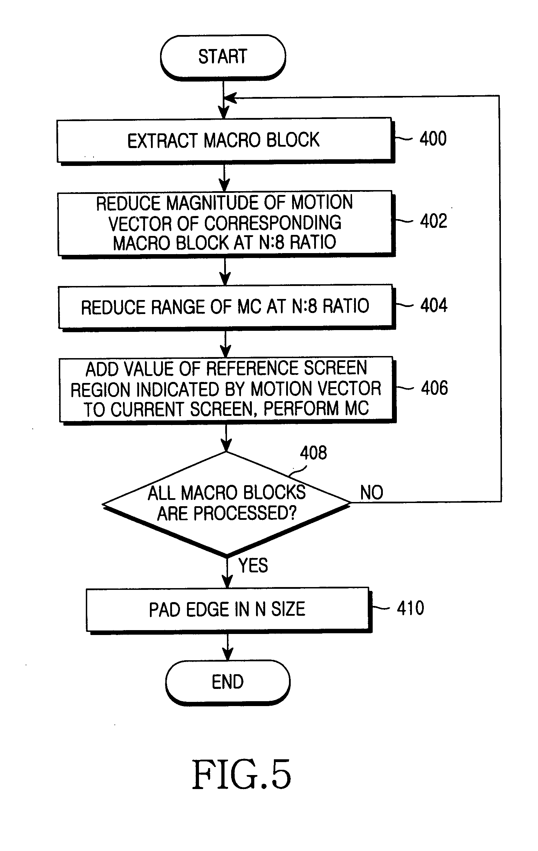

As illustrated in FIG. 5, a flowchart illustrating a process (400-410) of the NxN MC block 202, the NxN MC block 202 extracts a macro block, which will be MC-processed from the IDCT block 200 in step 400. As illustrated in FIG. 6, a magnitude of the motion vector MV of the macro block is reduced at a ratio of N:8 in step 402, and the range of the MC is reduced at a ratio of N:8 in step 404. A reference screen indicated by the corresponding motion vector MV, namely a value of the I-VOP region stored in the frame buffer 204 is added to the current screen, and MC-processed in step 406. Thereafter, when all the macro block processes are finished in step 408, the routine goes to step 410, and when they are not finished, the routine goes to step 400 to repeatedly perform the MC on the next macro block. The whole screen image, which has been MC-processed, is scaled down at a size of N and padded as in the NxN IDCT block 200 in step 410. Therefore, the MC for one whole screen is finished.

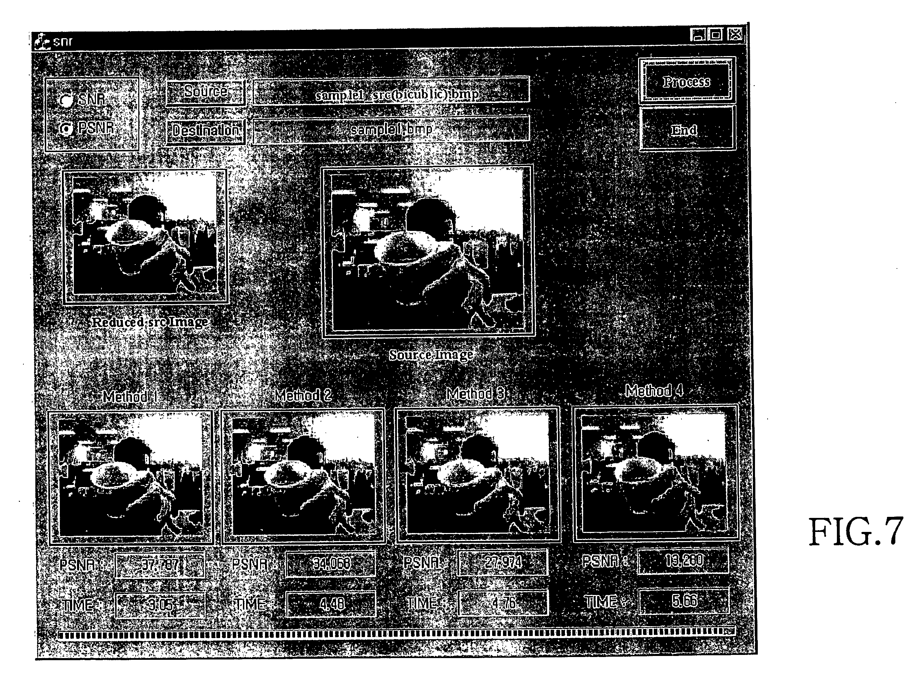

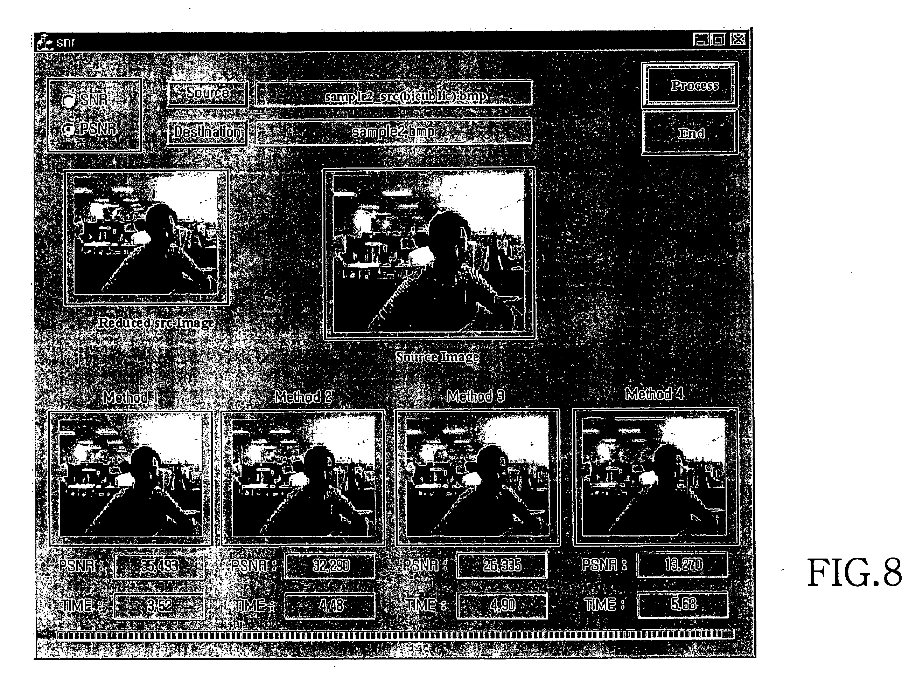

FIGS. 7 and 8 are diagrams illustrating a simulation result for comparing quality of scaled-down images in the present invention and the conventional art. Scaled-down images from two original images obtained by using the Paintshop Pro 5 are used as reference images, and scaled-down images obtained according to the present invention and other three methods are compared in quality of images and processing speed. In FIGS. 7 and 8, 'sample1' and 'sample2' denote sample images, 'Method1' represents quality and processing speed of the scaled-down image obtained by the process in a DCT domain in accordance with the present invention, 'Method2' represents quality and processing speed of the scaled-down image obtained by a spatial domain method, down sampling, 'Method3' represents quality and processing speed of the scaled-down image obtained by the spatial domain method, down sampling and interpolation, and 'Method4' represents quality and processing speed of the scaled-down image obtained by the spatial domain method, DDA. The quality of images is compared according to a peak signal to noise ratio (PSNR) value, and the processing speed is compared according to time consumed. Still referring to FIGS. 7 and 8, 'PSNR' denotes a PSNR value in dB units. The higher the PSNR value is, the better the quality of images is. In addition, 'TIME' indicates a processing time in second units. Since the simulation environment is the MS-Windows 98, the time consumed for 50 times is measured.

The PSNR and the processing time of the scaled-down images obtained from the two original images are shown in following Tables 1 and 2:

<Table 1>

|  | Present invention | Method 2 | Method 3 | Method 4 |
|---|---|---|---|---|
| Sample 1 | 37.787 | 34.068 | 27.974 | 12.28 |
| Sample 2 | 35.493 | 32.29 | 26.335 | 13.27 |

<Table 1>   (continued)

| | Present invention | Method 2 | Method 3 | Method 4 |
|---|---|---|---|---|
| Average | 36.64 | 33.179 | 27.1545 | 13.275 |

<Table 2>

| | Present invention | Method 2 | Method 3 | Method 4 |
|---|---|---|---|---|
| Sample 1 | 3.05 | 4.48 | 4.76 | 5.66 |
| Sample 2 | 3.52 | 4.48 | 4.9 | 5.68 |
| Average | 3.285 | 4.48 | 4.83 | 5.67 |

As is shown in Tables 1 and 2, the scaled-down images of the invention have higher quality and processing speed than the other methods.

Accordingly, the NxN block DCT image is extracted from the 8x8 block DCT image in the image scale-down ratio according to the DC coefficients, IDCT-processed and MC-processed. As a result, the compression video decoder can directly output the image according to a screen size of the display device, without using a special scale-down block for scaling down the image. In addition, the compression video decoder increases the speed by reducing computational complexity for scaling down the image, maintain quality of the original image and minimize distortion.

As discussed earlier, in accordance with the present invention, since the compression video decoder does not require the special scale-down block, and reduces computational complexity, if it is applied to the motion picture terminal, the manufacturing cost can be cut down, and an additional function can be added. Moreover, the compression video decoder prevents accumulation of errors due to unnecessary computations even in the process by the DCT domain, to provide users with high quality images.

While the invention has been shown and described with reference to a certain preferred embodiment thereof, it will be understood by those skilled in the art that various changes in form and details may be made therein. Especially in this embodiment, the compressed and encoded video stream of the MPEG-4 simple profile is decoded and scaled down, but the compressed and encoded video stream of the video compression method using the DCT and MC such as MPEG-1, MPEG-2, MPEG-4, H.261, H.263 and H.26L can also be decoded and scaled down. In addition, the present invention can be applied to a variety of devices decoding and scaling down the compressed and encoded video stream as well as the motion picture terminal.

**Claims**

1.   A compression video decoder for decoding a compressed and encoded video stream according to a video compression method utilizing discrete cosine transform (DCT) and motion compensation (MC), comprising:

an inverse discrete cosine transform (IDCT) block (200) for extracting an NxN block DCT image in an image scale-down ratio according to DC coefficients from an 8x8 block DCT image, which has been obtained from the compressed and encoded video stream and will be IDCT-processed, multiplying the DC coefficients by N/8, and performing the IDCT on the multiplied DC coefficients;
an MC block (202) for performing the MC by using a reference image IDCT-processed by the IDCT block and a current image, and reducing a magnitude of a motion vector and a range of the MC at a ratio of N:8; and
a frame buffer (202) for storing the reference image and the current image for the MC.

2.   The decoder as claimed in claim 1, wherein the MC block performs the MC in a size of NxN.

3.   The decoder as claimed in claim 1, wherein the MC block performs the MC in a size of $2N \times 2N$.

4.   A compression video decoding method for decoding a compressed and encoded video stream according to a video compression method using discrete cosine transform (DCT) and motion compensation (MC), comprising the steps of:

extracting an NxN block DCT image in an image scale-down ratio according to DC coefficients from an $8 \times 8$

block DCT image, which has been obtained from the compressed and encoded video stream and will be inverse discrete cosine transformed (IDCT), multiplying the DC coefficients by N/8, and performing the IDCT on the multiplied DC coefficients; and

performing the MC by using an IDCT-processed reference image and a current image, and reducing a magnitude of a motion vector and a range of the MC at a ratio of N:8.

5. The method as claimed in claim 4, wherein the IDCT step and the MC step, respectively, comprise a step for padding an edge at a size of N.

6. The method as claimed in claim 4, wherein the MC step performs the MC in a size of N×N.

7. The method as claimed in claim 4, wherein the MC step performs the MC in a size of 2N×2N.

8. The method as claimed in claim 5, wherein the MC step performs the MC in a size of N×N.

9. The method as claimed in claim 5, wherein the MC step performs the MC in a size of 2N×2N.

COMPRESSED
AND ENCODED
VIDEO STREAM

100

102 HEADER PARSER

104 VARIABLE LENGTH DECODER

106 DQ BLOCK

108 IDCT BLOCK

I-VOP

110 MC BLOCK

P-VOP

112 FRAME BUFFER

114 SCALE-DOWN BLOCK

116 FRAME BUFFER

# FIG.1
## (PRIOR ART)

COMPRESSED
AND ENCODED
VIDEO STREAM

FIG.2

START

DIVIDE WHOLE SCREEN IN
8 X 8 BLOCK UNITS — 300

EXTRACT N X N BLOCK DCT IMAGE
FROM 8 X 8 BLOCK DCT IMAGE — 302

N X N IDCT PROCESS — 304

RECONSTITUTE WHOLE SCREEN
TO N X N BLOCK — 306

308

ALL 8 X 8 BLOCKS
ARE PROCESSED?                    NO

YES

PAD EDGE IN N SIZE — 310

END

# FIG.3

(a)

(b)

FIG.4a

(a)  (b)  (c)  (d)  (e)

FIG.4b

START

EXTRACT MACRO BLOCK ～ 400

REDUCE MAGNITUDE OF MOTION VECTOR OF CORRESPONDING MACRO BLOCK AT N:8 RATIO ～ 402

REDUCE RANGE OF MC AT N:8 RATIO ～ 404

ADD VALUE OF REFERENCE SCREEN REGION INDICATED BY MOTION VECTOR TO CURRENT SCREEN, PERFORM MC ～ 406

408

ALL MACRO BLOCKS ARE PROCESSED? — NO

YES

PAD EDGE IN N SIZE ～ 410

END

FIG.5

(a)                              (b)                              (c)

MV MAGNITUDE REDUCTION

MV

MC RANGE REDUCTION

MV

MV

FIG.6

EP 1 307 054 A2

FIG.7

FIG.8

EP 1 307 054 A2